# EUROPEAN PATENT APPLICATION

(11) **EP 1 316 520 A1**
(43) Date of publication of application: **04.06.2003**
(21) Application number: 01830737.1
(22) Date of filing: 30.11.2001
(51) Int. Cl.: B65G 47/84

(54) **Support structure of an apparatus for the handling of containers**

(71) Applicant: SIG SIMONAZZI S.P.A., 43040 Parma (IT)
(72) Inventor: Preti, Fabrizio, c/o Sig Simonazzi, 43040 Parma (IT); Barbieri, Massimiliano, c/o Sig Simonazzi, 43040 Parma (IT)
(74) Representative: Long, Giorgio

(57) **Abstract**

The present invention relates to a support structure (2) of an apparatus (1) for the handling of containers, comprising a plurality of distribution stars (3) for containers disposed substantially along an arc of a circle.

The said structure permits the apparatus to adapt itself to different types of processing stations (6,12) for the treatment of containers having different diameters.

## Description

The present invention relates to a support structure of an apparatus for the movement of containers, in particular bottles.

The apparatuses to which the present invention specifically relates are those equipped with one or more transfer stars for transferring containers from and to processing stations, where such processing stations may be disposed within or on the periphery of the movement apparatus. In general, the processing stations are represented by substantially circular carousels in which a particular phase of the processing of a container takes place.

This type of apparatus is normally modular, each module comprising one or more transfer stars with or without one or more processing stations for the containers, such as rinsing stations, filling stations, capsule placement stations, labelling stations, and the like. The various transfer stars and the processing stations, if present, are customarily mounted on a structure supported on the floor.

In particular, as is widely known, the said structure has to be such as to support, in line, the transfer stars in alignment with respective processing stations. Customarily, this in-line arrangement is produced substantially along two straight half-lines forming a sort of L.

The abovementioned arrangement of the transfer stars to form an L is imposed by the relative positions of the processing stations for the containers. Specifically, the transfer stars must necessarily be positioned at very precise locations along the said stations in order to be able to remove and transfer the containers in a synchronized manner.

It is widely known that there are processing stations for containers having different sizes of carousel such as to meet requirements associated not only with the type of processing but also with the quantity and/or type of containers handled.

It is clear, then, that, depending on requirements, carousels may be used whose dimensions may vary, in some cases considerably.

It follows from this that the relative positions of the carousels are not always the same and, consequently, the said transfer stars have to be supported by an appropriate support structure designed and constructed to measure on each occasion. In other words, no single support structure currently exists which is capable of being adapted to different types of carousels.

It is therefore an object of the present invention to provide a structure for the handling of containers which is advantageously versatile in a manner such as to permit use thereof in any type of system of processing stations for containers in general.

This object is achieved by a support structure for an apparatus for the handling of containers as defined in the appended claims.

Further features and the advantages of the support structure for an apparatus for the handling of containers forming the subject of the present invention will be more clearly apparent from the description of an example of embodiment given below by way of indication and without implying any limitation, and with reference to the following figures:
Figure 1 shows a plan view of an apparatus for the handling of containers supported by the support structure according to the invention;
Figure 2 shows a perspective view of a support structure for an apparatus for the handling of containers according to the invention.

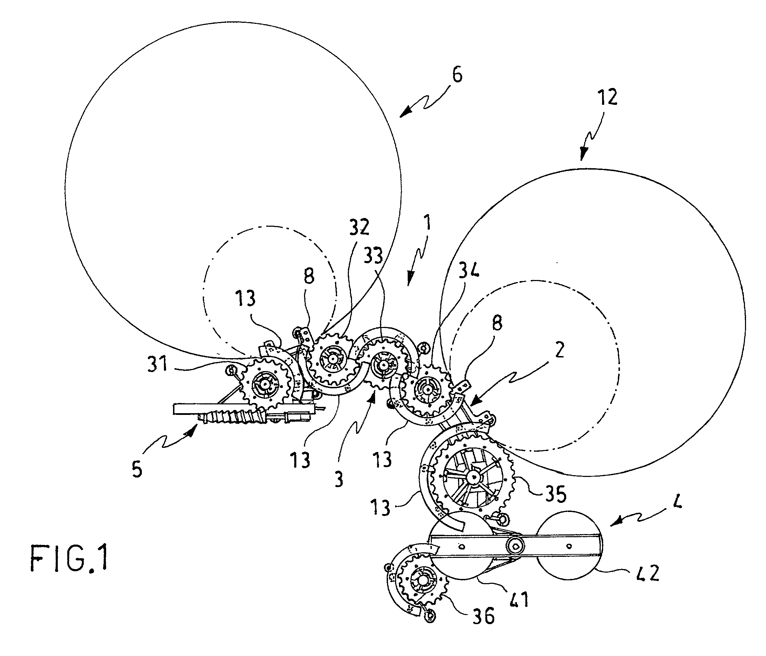

With reference to Figure 1, the apparatus for the handling of containers, designated as a whole by the numeral 1, comprises a support structure 2 capable of supporting a plurality 3 of transfer stars, an operating unit, in the example a capsule placement apparatus 4, and spacer means 5 for the containers.

In particular, the movement of the containers from the time of their arrival at the processing stations, the passage from one station to another and the exit from the whole processing system is carried out, as is widely known, by a plurality of transfer stars 3 disposed in line.

Advantageously, the said transfer stars 3 are supported by a support structure 2 in a manner such that the stars are disposed along an arc of a circle.

The support structure 2 in itself may be produced in any form such as to allow the positioning of the distribution stars 3 substantially along an arc of a circle.

Preferably, the support structure 2 comprises a support element 20, having a substantially arcuate shape, bearing the abovementioned transfer stars 3.

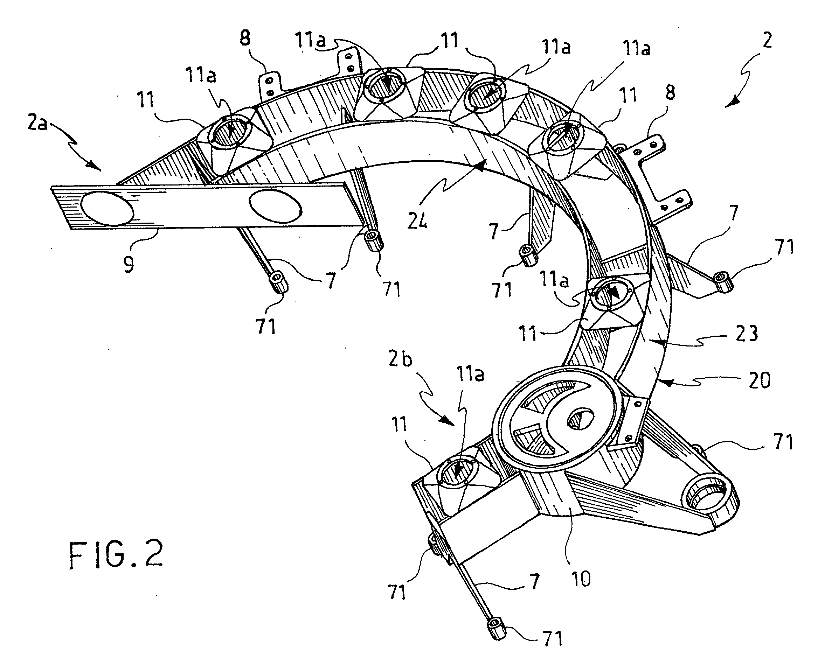

With reference to Figure 2, the support element 20 advantageously comprises a first 23 and a second 24 lateral belt extending along the said arc of a circle and substantially equidistant from one another.

A plurality of pairs of feet 7 in the shape of an inverted V are fixed to the lower edges of the said first 23 and second 24 lateral belts and astride the latter, such as simultaneously to define means for the connection of the said first 23 and second 24 lateral belts.

The feet 7 are equipped with an eyelet 71 for the reception of fixing means (not shown), of a conventional type, for fixing the support structure 2 to, for example, a floor.

The first lateral belt 23, having its convexity facing outwards, is equipped with hooking means 8 for the fixing of one or more processing stations for the containers.

At a first end 2a of the support element 20 a support plate 9 for the abovementioned spacer means 5 of the containers is provided. In the vicinity of a second end 2b of the support element 20, by contrast, is provided a seating 10 for a capsule placement apparatus 4 of the type commonly used, for example, for the sealing of bottles.

The upper edges of the said first 23 and second 24 lateral belts of the support element 20 are further connected bridgewise by seats 11 each capable of receiving a head portion (not shown) of the rotating shaft of a transfer star 3.

Preferably, the seats 11 are in the form of a frustum whose major base, of substantially square shape, has two parallel sides, each integral with the upper edge of the said first 23 or second 24 lateral belts, respectively, and is open at the bottom while the upper minor base is provided with a hole 11a from which the shaft of the said distribution star 3 projects.

The spacer means 5, as is shown in Figure 1, are represented for example by an archimedean screw of conventional type capable of spacing the containers arriving from a transport system (not shown) wherein they are in reciprocal contact at the pitch of the first transfer star 31.

The said first transfer star 31 in turn takes the containers from the spacer means 5 and releases them to the first processing station, designated by the reference numeral 6 e represented diagrammatically by a circle, in a completely conventional manner.

Typically, the first processing station 6 for the containers is a carousel-type rinsing machine.

Subsequently, as is widely known, a set of transfer stars 32, 33 and 34 pick up the containers exiting from the first processing station 6 and carry them to the next processing station 12, represented for example by a customary filling machine which, in Figure 1, has been represented diagrammatically by a circle.

A further transfer star 35 then picks up the containers emerging from the processing station 12 and transfers them to the capsule placement machine 4.

The capsule placement apparatus 4, of which the two feeders 41 and 42 are shown in Figure 1, is positioned within the seating 10 described above with reference to Figure 2. The containers, filled if appropriate at the filling station 12, arrived here and are properly closed in accordance with normal and widely known procedures. Finally, the said containers, thus sealed, are picked up by a final transfer star 36 and removed from the apparatus for the movement of containers 1 by means of an appropriate conveyor (not shown).

Preferably, all the transfer stars 31-36, which are conventional per se, are equipped with containment/guide means 13 to prevent the handled containers being accidentally expelled from the said stars by reason of the centrifugal force.

In particular, the said containment/guide means 13 are represented by two fins disposed on the periphery of each transfer star 32-36 along its circumferential working path. In other words, the fins 13 begin level at the point at which the stars receive the containers and continue to the point at which they release the said containers.

Moreover, the fins 13 (in Figure 1 only one fin is represented) are superposed one upon the other, parallel and at a certain distance apart.

From what has been described hitherto and is shown in the figures, it is clear that the apparatus for the movement of containers can be easily and advantageously adapted to processing stations for containers having carousels that may also be of very different sizes.

Specifically, by virtue of the particular support structure 2, the transfer stars 32-36 are disposed along an arc of a circle which is tangential relative to the processing stations 6 and 12.

Consequently, even if the carousels of the said stations are of variable sizes, as represented for example in Figure 1 by the circles drawn in dot-and-dash lines, the support structure 2 always ensures constant points of tangency. The exchange of containers between the transfer stars and the processing stations can then take place in line with the said points of tangency.

Moreover, it is clear that the support structure according to the invention permits a significant saving of costs for those intending to replace the production line of processing apparatuses, since they will not be obliged to design and construct a support structure adapted to the specific requirements of each occasion.

A further advantage contributed by the support structure according to the invention resides in the fact that the support element 20, by virtue of its open framework, allows any liquid used to fill the containers that may accidentally escape during their handling to run down onto the floor.

In addition, the frustoconical shape of the seats 11 for the distribution stars 3 itself further facilitates the running down of the said filling liquid onto the floor, without its being deposited on the support structure 2 and soiling it.

This feature therefore facilitates the cleaning and maintenance of the apparatus.

The distribution stars 32-36 and the capsule placement apparatus 4 are also equipped with independent motors (not shown), preferably of the electrical type, in particular brushless or stepping motors. In any event, these motors will have to be synchronized with one another and with the filler 12. The apparatus according to the present invention will thus be able to comprise a control and monitoring unit which makes it possible to control the movement of all the moving parts and to monitor the proper operation of the plant.

The number and types of the distribution stars 32-36 and of the operating units positioned within the apparatus may also be different from case to case. The apparatus will in fact also be able to comprise more than one processing unit, such as for example a filling apparatus and a capsule placement apparatus or a capsule placement apparatus and a labelling apparatus or all three, and so on. In place of the independent motor drives described here, it will be possible to provide a conventional motor drive in which the motion is transmitted to the various units by means of gears and toothed wheels.

The support structure of apparatuses for the processing of containers according to the invention may be constructed with any type of material customarily used for this type of structure.

The elements that constitute the said structure may vary in accordance with particular requirements or preferences.

For example, the two belts 23 and 24 may be replaced by a single arcuate element, which may be hollow or solid depending on the desired characteristics of greater or lesser rigidity or strength of the said structure.

Moreover, the shape of the seats 11 for the head portions of the rotating shafts of the distribution stars may vary in accordance with preferences or particular requirements.

As can be appreciated from what has been described, the support structure of apparatuses for the processing of containers according to the invention makes it possible to satisfy the requirements to which reference was made in the introductory part of the present description and, at the same time, to overcome the disadvantages associated with the support structures of the prior art.

Clearly, a person skilled in the art will be able, in order to meet contingent and specific requirements, to introduce numerous modifications and variations to the support structure described above, but in all cases within the scope of the invention as defined in the claims that follow.

## Claims

1. Support structure (2) for apparatuses (1) for the handling of containers, **characterized in that** a plurality of distribution stars (3) for containers are disposed substantially along an arc of a circle.

2. Support structure (2) according to Claim 1, comprising a support element (20) bearing the said plurality of distribution stars (3), the said element having a substantially arcuate shape.

3. Support structure (2) according to Claim 2, wherein the said support element (20) comprises a first lateral belt (23) and a second lateral belt (24) substantially equidistant from one another.

4. Support structure (2) according to any one of Claims 1 to 3, comprising a plurality of pairs of feet (7) in the shape of an inverted V.

5. Support structure (2) according to Claim 4, wherein the said pairs of feet (7) are fixed to the lower edges of the said first (23) and second (24) lateral belts and astride the latter so as to form connection elements connecting the said first (23) and second (24) lateral belts.

6. Support structure (2) according to any one of Claims 2 to 5, wherein the said support element (20) comprises a support plate (9) for spacer means (5) positioned at a first end (2a) of the said support element.

7. Support structure (2) according to any one of Claims 2 to 6, wherein the said support element (20) comprises a seating (10) for a capsule placement apparatus (4) positioned at its second end (2b).

8. Support structure (2) according to any one of Claims 4 to 7, wherein on the upper edges of the said first (23) and second (24) lateral belts are provided seats (11) each capable of receiving a head portion of the rotating shaft of a distribution star (31, 32, 33, 34, 35, 36).

9. Support structure (2) according to Claim 8, wherein the said seats (11) are of substantially frustoconical shape, having the major base open and the minor base provided with a hole (11a) from which the said rotating shaft projects.

10. Support structure (2) according to any one of Claims 1 to 9, comprising containment/guide means (13) susceptible of preventing the accidental expulsion of containers from the distribution stars (31, 32, 33, 34, 35, 36) during their handling.

11. Support structure (2) according to Claim 10, wherein the said containment/guide means (13) comprise two fins disposed on the periphery of each transfer star (31, 32, 33, 34, 35, 36) along their circumferential working path.

12. Support structure (2) according to any one of Claims 1 to 11, wherein the distribution stars (31, 32) capable of carrying containers to a processing station (6, 12) and the distribution stars (34, 35) capable of removing the said containers at the exit from the said processing stations (6, 12) are positioned substantially tangentially relative to the said processing stations.

13. Apparatus for the handling of containers comprising a support structure (2) according to any one of the preceding claims.
